Europäisches Patentamt

European Patent Office

Office européen des brevets

(19)

(11) Veröffentlichungsnummer: **0 014 488**
**B1**

(12) EUROPÄISCHE PATENTSCHRIFT

(45) Veröffentlichungstag der Patentschrift:
20.10.82

(51) Int. Cl.³: **C 10 J 3/56**

(21) Anmeldenummer: 80200027.3

(22) Anmeldetag: 14.01.80

(54) Verfahren zur Erzeugung von wasserstoff- und kohlenmonoxydhaltigen Gasen.

(30) Priorität: 02.02.79 DE 2903985

(43) Veröffentlichungstag der Anmeldung:
20.08.80 Patentblatt 80/17

(45) Bekanntmachung des Hinweises auf die Patenterteilung:
20.10.82 Patentblatt 82/42

(84) Benannte Vertragsstaaten:
BE FR GB IT NL SE

(56) Entgegenhaltungen:
DE-A-2 549 784
FR-A-2 287 497
GB-A-1 494 006
US-A-2 680 065

(73) Patentinhaber: Bergwerksverband GmbH,
Franz-Fischer-Weg 61, D-4300 Essen 13 (DE)

(72) Erfinder: van Heek, Karl Heinrich, Dr., Fährenkotten 3,
D-4300 Essen-Heisingen (DE)
Erfinder: Jüntgen, Harald, Prof. Dr., Bonscheidter
Strasse 79, D-4300 Essen 15 (DE)
Erfinder: Peters, Werner, Prof. Dr., Langacker 5,
D-4630 Bochum 6 (DE)

(74) Vertreter: Frühbuss, Heinrich, Dr.rer.nat. et al,
Franz-Fischer-Weg 61, D-4300 Essen 13 (DE)

## Verfahren zur Erzeugung von wasserstoff- und kohlenmonoxydhaltigen Gasen

Die Erfindung betrifft ein Verfahren zur Erzeugung von $H_2$- und CO-haltigen Gasen aus Kohle oder Koks gemäss dem Oberbegriff von Patentanspruch 1.

Ein solches Verfahren hat den Zweck, Kohle oder Koks in ein Gas umzuwandeln, welches auf vielfältige Weise als Chemiestoff, als Reduktionsgas oder als Ersatz für Naturgas verwendet werden kann. Das Hauptproblem bei der Erzeugung solcher Gase ist die Zuführung der für die Vergasung der Kohle oder Koks mit bekannten Vergasungsmitteln, beispielsweise Wasserdampf, erforderlichen Wärme.

Es ist bekannt, die Wasserdampfvergasung von Kohle auf vielfältige Weise, beispielsweise im Festbett, in der Wirbelschicht oder in der Flugstaubwolke, durchzuführen. Bei der Zuführung der Wärme unterscheidet man zwischen autothermen Verfahren, bei denen die Reaktionswärme im Gasgenerator durch Teilverbrennung der Kohle erzeugt wird, indem man dem Vergasungsmittel Wasserdampf gewisse Mengen an Sauerstoff beimischt, und allothermen Verfahren, die sich dadurch auszeichnen, dass die Wärme ausserhalb des Gasgenerators durch Verbrennung von Kohle oder Vergasungsprodukten erzeugt und mit einem geeigneten Wärmeträger in den Vergasungsreaktor eingebracht wird. Als solche Wärmeträger sind beispielsweise Feststoffe wie keramische Körper oder teilvergaste Kohle bekannt.

Da bei dem autothermen Verfahren dem Wasserdampf Sauerstoff beigemischt wird, haben diese Verfahren den Nachteil, dass man in einer gesonderten Anlage reinen Sauerstoff herstellen und dem Wasserdampf beimischen muss, um das produzierte Gas nicht mit Stickstoff, wie bei einer Verwendung von Luft, zu verdünnen.

Es ist weiter bekannt, die Wasserdampfvergasung mit überhitztem Wasserdampf durchzuführen. Nachteilig wirkt sich bei einer solchen Arbeitsweise jedoch einmal die grosse zu transportierende und zu bewegende Feststoffmenge aus, die eine sehr komplizierte Anlage erfordert, und zum anderen führt die Überhitzung des Vergasungsmittels wegen der geringen spezifischen Wärme des Wasserdampfes dazu, dass selbst bei hoher Überhitzung, beispielsweise auf über 1100° C, nur eine Vergasung bei relativ niedrigen Temperaturen zustande kommt. Diese Arbeitsweise eignet sich demnach nur für hochreaktive Kohlen, wie beispielsweise Braunkohlen. Ausserdem ist eine grössere Menge Wasserdampf erforderlich als für die eigentliche Wasserdampfvergasung notwendig ist. Von Nachteil ist bei diesem bekannten Verfahren weiterhin, dass sowohl der Dampferzeuger als auch die Kondensation weitaus aufwendiger gebaut werden müssen, als es für den Reaktionsablauf bei der Wasserdampfvergasung eigentlich notwendig wäre.

Aus der US-A Nr. 2680065 ist ein Verfahren der eingangs genannten Art bekannt, bei welchem das in der Verbrennungszone entstehende Verbrennungsgas (Rauchgas) einem Wärmetauscher in der Vergasungszone und anschliessend der Atmosphäre zugeführt wird. Dies hat zur Folge, dass der Grossteil der in der Verbrennungszone anfallenden Asche als Flugstaub anfällt, welcher durch den Wärmetauscher in der Vergasungszone geleitet wird und zu Erosionsproblemen auf der Innenseite dieses Wärmetauschers führen kann.

Der Erfindung liegt die Aufgabe zugrunde bei einem Verfahren der eingangs genannten Art, die für die Wasserdampfvergasung von Kohle erforderliche Wärme auf einfache Weise auf Ausgangskohle oder -koks zu übertragen.

Diese Aufgabe wird erfindungsgemäss durch die kennzeichnenden Merkmale von Patentanspruch 1 gelöst.

Nach einer besonderen Ausführungsform der Erfindung ist der Vergasungszone eine gleichfalls mit einer Dampfwirbelschicht betriebene Entgasungszone vorgeschaltet.

Die Wirbelschichten werden vorteilhafterweise bei einem erhöhten Gasdruck von 5 bis 60 bar, vorzugsweise 20 bis 40 bar, betrieben, wobei die Entgasungszone bei 500 bis 800° C, vorzugsweise bei 700° C, die Vergasungszone bei 700 bis 870° C, vorzugsweise bei 790 bis 840° C, und die Verbrennungszone bei 900 bis 1050° C, vorzugsweise bei 950° C, betrieben werden.

Als besonders vorteilhaft hinsichtlich der Feststoffführung hat sich die Verwendung des Reaktors gemäss Patentanspruch 5, und hinsichtlich der grösse der Wärmeaustauschflächen die Verwendung von Helium gemäss Patentanspruch 6 erwiesen.

Ein Ausführungsbeispiel des erfindungsgemässen Verfahrens ist in der Zeichnung schematisch dargestellt und wird im folgenden näher beschrieben. Es zeigen

Fig. 1 ein Fliessschema des Wärmeträgerkreislaufes in einem Zweizonengasgenerator,

Fig. 2 ein Fliessschema des Wärmeträgerkreislaufes in einem Dreizonengasgenerator im Rahmen einer Gesamtanlage.

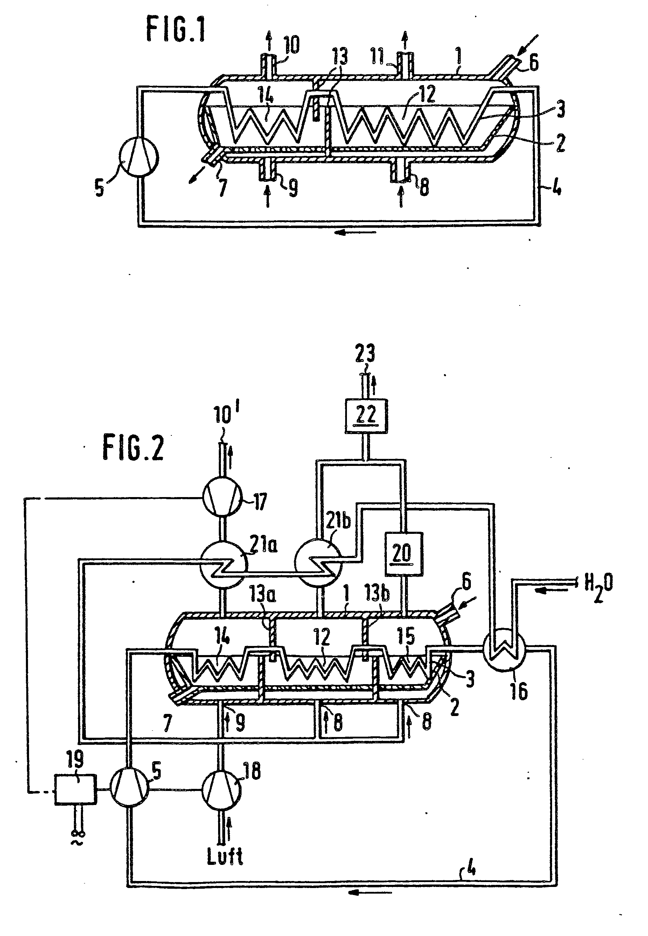

Gemäss Fig. 1 besteht der Gasgenerator 1 aus einem liegenden, zylindrischen Behälter, in dessen unterer Hälfte in einer mit einem Lochboden versehenen Wanne 2 die Wirbelschichten 12 und 14 betrieben werden. In der Wirbelschicht 12 wird die Teilvergasung von feinkörniger Kohle oder Koks durchgeführt, die durch den Einlass 6 in die Wirbelschicht 12 eintreten und mit dem durch den Einlass 8 zugeführten Wasserdampf zur Reaktion gelangen. Dabei entsteht ein an $H_2$ und COreiches Rohgas, welches den Gasgenerator 1 durch den Auslass 11 verlässt. Das teilweise vergaste Ausgangsmaterial tritt dann als Koks über ein Wehr oder Syphon 13 in die Wirbelschicht 14 ein, in der der Koks mit durch den Einlass 9 zugeführter Luft verbrannt wird. Das Rauchgas verlässt durch den Auslass 10 den Gasgenerator 1, während die Asche durch Auslass 7 abgezogen wird.

Der Feststofftransport erfolgt in dem Gasgenerator 1 vom Einlass 6 in horizontaler Richtung zum Auslass 7. Dieser Transport kommt dadurch zustande, dass sich die Wirbelschichten 12 und 14 wie eine Flüssigkeit verhalten und dadurch eine Strömung von der Eindosierung auf den Abzug hin entsteht.

Die für die Teilvergasung mit Wasserdampf erforderliche Wärme wird in die Wirbelschicht 12 über einen Wärmeträgerkreislauf 4 eingebracht, indem über ein Gebläse 5 ein geeignetes gasförmiges Medium, beispielsweise Helium, als Wärmeträger umgepumpt wird. Das gasförmige Medium wird über einen in die Wirbelschicht 14 eingetauchten Wärmetauscher 3 während der Verbrennung des teilvergasten Kokses zunächst aufgeheizt. Es strömt anschliessend in ein ähnliches Wärmetauschersystem ein, das in die Wirbelschicht 12 eintaucht, wo es seine Wärme für die Vergasungsreaktion sowie zur Aufheizung von Kohle und Koks abgibt.

Für den Praktiker bestehen keine Schwierigkeiten, durch Auswahl der Volumina für die Wirbelschichten 12 und 14 sowie der Strömungsgeschwindigkeit des Ausgangsmaterials den Grad der Teilvergasung so weit zu treiben, dass gerade genug Kohlenstoff über das Wehr oder den Syphon 13 in die Verbrennungszone eintritt, dass das Helium gerade genug Wärme mit sich führt, wie zur Durchführung der Vergasungsreaktion erforderlich ist.

Gemäss Fig. 2 ist im Gasgenerator 1 eine weitere Dampfwirbelschicht 15 zur Durchführung einer Entgasung von Kohle vorgeschaltet. Diese Arbeitsweise ist besonders bei solchen Kohlen vorteilhaft, die bei der Aufheizung im Temperaturbereich von 400 bis 600° C grössere Mengen gasförmiger oder flüssiger Entgasungsprodukte abgeben. Auf diese Weise können diese Produkte leicht als wertvolle Nebenprodukte gewonnen werden. Die Eindosierung dieser Kohle durch den Einlass 6 erfolgt beispielsweise mittels einer Strahlaufgabe, die durch die Backfähigkeit solcher Kohlen nicht behindert ist.

Die Fig. 2 zeigt weiterhin die Durchführung des erfindungsgemässen Verfahrens in einer Gesamtanlage. Hierbei durchströmt das durch den Gasgenerator 1 im Wärmeträgerkreislauf 4 geführte gasförmige Medium, beispielsweise Helium, nachdem es in der Wirbelschicht 14 durch Verbrennung des teilvergasten Kokses Wärme aufgenommen und diese in der Wirbelschicht 12 zur Teilvergasung sowie in der Wirbelschicht 15 zur Entgasung von Kohle abgegeben hat, nach dem Verlassen des Gasgenerators 1 zunächst einen Verdampfer 16, in dem der für die Wirbelschichten 12 und 15 erforderliche Prozessdampf erzeugt wird, und dann über das Gebläse 5 in den Gasgenerator zurück.

Das Entgasungsrohgas aus der Wirbelschicht 15 wird in der Vorrichtung 20 gereinigt, während das Vergasungsrohgas aus der Wirbelschicht 12 und das Rauchgas aus der Wirbelschicht 14 in den Gaskühlern 21a und 21b gekühlt werden. Der Prozessdampf wird durch Leitungen 8 in die Wirbelschichten 12 und 15 eingeführt, während durch Leitung 9 in die Wirbelschicht 14 Luft über den Luftkompressor 18 zugeführt wird.

Das Entgasungs- und das Vergasungsrohgas werden zweckmässigerweise gemischt und in einer Umwandlungsstufe 22 zu dem gewünschten Nutzgas 23 umgewandelt. Die Umwandlungsstufe 22 kann beispielsweise in einer Konvertierung zur Herstellung eines Synthesegases mit einem gewünschten Verhältnis von CO und $H_2$ oder in einer Methanisierung zur Herstellung von Methan bestehen. Das Rauchgas 10 wird in der Entspannungsturbine 17 entspannt und abgeführt.

Durch die Gaskühler 21a und 21b führt man Dampf aus dem Verdampfer 16, so dass dieser unter Nutzung der fühlbaren Wärme überhitzt wird.

Die Entspannungsturbine 17 sitzt auf einer Welle mit dem Luftkompressor 18, dem Gebläse 5 und einem Generator 19 zur Erzeugung von elektrischem Strom.

*Ausführungsbeispiel:*

In einen Gasgenerator mit einer Vergasungs- und einer Verbrennungszone einer Länge von 50 m und 6 m Durchmesser werden 70 t/h feinkörnige Kohle aufgegeben. Die Vergasung findet bei 785° C und 40 bar statt und es werden 170 000 $Nm^3$/h Rohgas erhalten. Bei der Reinigung des Rohgases fallen 11,75 t/h Teer an. In der Verbrennungszone werden 24 t/h Rückstandskoks aus der Vergasungszone verbrannt.

Das umgewälzte Helium als Wärmeträger kühlt sich in der Vergasungszone von 900° C auf 800° C ab. Zur Erzeugung des Prozessdampfes kühlt sich das Helium um weitere 75° C auf 725° C ab. Die durch Abwärmenutzung erzeugte Prozessdampfmenge beträgt insgesamt 185 t/h Dampf.

Der Luftbedarf der Verbrennungszone beträgt 193 000 $Nm^3$/h Luft. Die Verbrennung findet bei 950° C statt.

**Patentansprüche**

1. Verfahren zur Erzeugung von $H_2$- und CO-haltigen Gasen durch Teilvergasung von feinkörniger Kohle oder Koks, wobei das Rohmaterial in einer Vergasungszone unter Einwirkung von Dampf in einer Wirbelschicht und unter Erhitzung mittels in die Wirbelschicht eingetauchter, von einem gasförmigen Medium durchflossenen Wärmeträger teilvergast, der Rückstandskoks in eine der Vergasungzone nachgeschalteten Verbrennungszone übergeführt und darin in einer mit Luft angeströmten Wirbelschicht verbrannt wird, wobei die freiwerdende Wärme das der Vergasungszone zuströmende gasförmige Medium erhitzt, dadurch gekennzeichnet dass das in der Vergasungszone abgekühlte Medium in einem geschlossenen Kreislauf über einen Wärmetauscher in die Verbrennungszone zurückgeführt wird.

2. Verfahren nach Anspruch 1, dadurch gekennzeichnet, dass der Vergasungszone eine gleichfalls mit einer Dampfwirbelschicht betriebene, Entgasungszone vorgeschaltet ist.

3. Verfahren nach Anspruch 1 und 2, dadurch gekennzeichnet, dass die Wirbelschichten unter einem erhöhten Gasdruck von 5 bis 60 bar, vorzugsweise 20 bis 50 bar, betrieben werden.

4. Verfahren nach Anspruch 1 bis 3, dadurch gekennzeichnet, dass die Entgasungszone bei 500 bis 800° C, vorzugsweise bei 700° C, die Vergasungszone bei 700 bis 870° C, vorzugsweise bei 790 bis 840° C, und die Verbrennungszone bei 900 bis 1050° C, vorzugsweise bei 950° C, betrieben werden.

5. Verfahren nach einem oder mehreren der Ansprüche 1 bis 4, gekennzeichnet durch die Verwendung eines durch Überlaufwehre die einzelnen Behandlungszonen direkt verbindenden, horizontal liegenden Reaktors mit Feststofftransport in horizontaler Richtung.

6. Verfahren nach einem oder mehreren der Ansprüche 1 bis 5, gekennzeichnet durch die Verwendung von Helium als Kreislaufmedium.

## Claims

1. Method of producing gases containing hydrogen and carbon monoxide by partial gasification of fine-grained coal or coke, the raw material being partially gasified in a gasification zone under the effect of steam in a fluidized bed and heating by means of a heat carrier which is immersed in the fluidized bed and through which a gaseous medium flows, the residual coke being transferred to a combustion zone arranged downstream of the gasification zone and being burnt in this zone in a fluidized bed against which air flows, the heat being released heating the gaseous medium flowing towards the gasification zone, characterized in that the medium which is cooled off in the gasification zone is led back in a closed circuit via a heat exchanger to the combustion zone.

2. Method according to claim 1, characterized in that a degasifying zone, which is likewise operated by means of a steam-fluidized bed, is arranged upstream of the gasification zone.

3. Method according to claim 1 or 2, characterized in that the fluidized beds are operated at an increased gas pressure of 5 to 60 bar, preferably 20 to 50 bar.

4. Method according to claims 1 to 3, characterized in that the degasifying zone is operated at 500 to 800° C, preferably at 700° C, the gasification zone is operated at 700 to 870° C, preferably at 790 to 840° C, and the combustion zone is operated at 900 to 1050° C, preferably at 950° C.

5. Method according to one or more of claims 1 to 4, characterized by the use of a horizontal reactor which directly connects the individual treatment zones by overflow barrages and has a continuous supply of solid material in a horizontal direction.

6. Method according to one or more of claims 1 to 5, characterized by the use of helium as the circulating medium.

## Revendications

1. Procédé de production de gaz contenant $H_2$ et CO par gazéification partielle de charbon ou de coke, dans lequel la matière brute est gazéifiée partiellement dans une zone de gazéification sous l'action de vapeur dans une couche turbulente et par chauffage au moyen d'un caloporteur traversé par un milieu gazeux, immergé dans la couche fluidisée, le coke résiduel est entraîné dans une zone de combustion installée après la zone de gazéification et y est brûlé dans une couche turbulente traversée par un courant d'air, où la chaleur libérée réchauffe le milieu gazeux entrant dans la zone de gazéification, ce procédé étant caractérisé en ce que le milieu refroidi dans la zone de gazéification est ramené en circuit fermé à travers un échangeur de chaleur dans la zone de combustion (milieu de circulation).

2. Procédé selon la revendication 1, caractérisé en ce qu'une zone de dégazage, fonctionnant également avec une couche turbulente à la vapeur, est disposée avant la zone de gazéification.

3. Procédé selon l'une des revendications 1 ou 2, caractérisé en ce que les couches turbulentes fonctionnent sous une pression de gaz élevée de 5 à 60 bar, de préférence de 20 à 50 bar.

4. Procédé selon l'une des revendications 1 à 3, caractérisé en ce que la zone de dégazage est réglée entre 500 et 800° C, de préférence à 700° C, la zone de gazéification est réglée entre 700 et 870° C, de préférence entre 790 et 840° C, et la zone de combustion est réglée entre 900 et 1050° C, de préférence à 950° C.

5. Procédé selon l'une des revendications 1 à 4, caractérisé en ce qu'on utilise un réacteur horizontal où les zones de traitement individuelles sont directement reliées par un déversoir, avec un transport continu en direction horizontale de la substance solide.

6. Procédé selon l'une des revendications 1 à 5, caractérisé en ce qu'on utilise de l'hélium comme milieu de circulation.

FIG.1

FIG.2